(19) Europäisches Patentamt
European Patent Office
Office européen des brevets

(11) **EP 3 298 360 B1**

(12) **EUROPÄISCHE PATENTSCHRIFT**

(45) Veröffentlichungstag und Bekanntmachung des Hinweises auf die Patenterteilung:
**08.12.2021 Patentblatt 2021/49**

(21) Anmeldenummer: **16718685.7**

(22) Anmeldetag: **26.04.2016**

(51) Int Cl.:
***G01F 25/00*** (2006.01)     ***G01F 1/66*** (2006.01)
***G01N 29/12*** (2006.01)

(86) Internationale Anmeldenummer:
**PCT/EP2016/059310**

(87) Internationale Veröffentlichungsnummer:
**WO 2016/184648 (24.11.2016 Gazette 2016/47)**

(54) **VERFAHREN, COMPUTERPROGRAMMPRODUKT UND VORRICHTUNG ZUR ERMITTLUNG EINER CHARAKTERISTISCHEN GRÖSSE ZUR BEWERTUNG EINER MESSANORDNUNG UMFASSEND EIN CLAMP-ON-ULTRASCHALL-DURCHFLUSSMESSGERÄT UND EIN MESSROHR**

METHOD, COMPUTER PROGRAM PRODUCT AND APPARATUS FOR DETERMINING A CHARACTERISTIC PARAMETER FOR EVALUATING A MEASURING DEVICE COMPRISING A CLAMP-ON ULTRASONIC FLOWMETER AND A MEASURING PIPE

PROCÉDÉ, PRODUIT DE LOGICIEL D'ORDINATEUR ET APPAREIL POUR DÉTERMINER UN PARAMÈTRE CARACTÉRISTIQUE POUR ÉVALUER UN DISPOSITIF DE MESURE COMPRENANT UN DÉBITMÈTRE ULTRASONORE DU TYPE CLAMP-ON ET UNE CONDUITE DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2015 DE 102015107753**

(43) Veröffentlichungstag der Anmeldung:
**28.03.2018 Patentblatt 2018/13**

(73) Patentinhaber: **Endress+Hauser Flowtec AG
4153 Reinach (CH)**

(72) Erfinder:
• **PLOSS, Peter
95445 Bayreut (DE)**
• **RUPITSCH, Stefan J.
90461 Nürnberg (DE)**
• **BEZDEK, Michal
4147 Aesch (CH)**
• **FRÖHLICH, Thomas
4142 Münchenstein (CH)**
• **KISSLING, Beat
4153 Reinach (CH)**

(74) Vertreter: **Andres, Angelika Maria
Endress+Hauser Group Services
(Deutschland) AG+Co. KG
Colmarer Straße 6
79576 Weil am Rhein (DE)**

(56) Entgegenhaltungen:
**DE-A1- 19 625 667      DE-A1-102009 046 871
DE-A1-102011 005 170**

• **FUNCK B ET AL: "Acoustic transfer function of the clamp-on flowmeter", IEEE TRANSACTIONS ON ULTRASONICS, FERROELECTRICS AND FREQUENCY CONTROL, IEEE, US, Bd. 43, Nr. 4, 1. Juli 1996 (1996-07-01), Seiten 569-575, XP011437417, ISSN: 0885-3010, DOI: 10.1109/58.503717 in der Anmeldung erwähnt**

**Beschreibung**

Die vorliegende Erfindung betrifft ein Verfahren zur Ermittlung einer charakteristischen Größe nach dem Oberbegriff des Anspruchs 1, sowie ein Computerprogrammprodukt und ein Clamp-On-Ultraschall-Durchflussmessgerät.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen. Die bekannten Ultraschall-Durchflussmessgeräte arbeiten häufig nach dem Laufzeitdifferenz-Prinzip. Beim Laufzeitdifferenz-Prinzip werden die unterschiedlichen Laufzeiten von Ultraschallwellen, insbesondere Ultraschallimpulsen, so genannten Bursts, in Abhängigkeit zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Die Ultraschallwellen werden mit Hilfe so genannter Ultraschallwandler erzeugt bzw. empfangen. Bei einer verbreiteten Bauart von Clamp-On-Ultraschall-Durchflussmessgeräten werden die Ultraschallwandler von außerhalb auf die Rohrwand eines Rohres gepresst. Ein großer Vorteil von Clamp-On-Ultraschall-Durchflussmesssystemen ist, dass sie das Messmedium nicht berühren und auf eine bereits bestehende Rohrleitung angebracht werden.

Die Ultraschallwandler bestehen normalerweise aus einem elektromechanischen Wandlerelement, z.B. ein piezoelektrisches Element und einem Koppelelement, dem sogenannten Koppelkeil. Bei Clamp-On-Systemen werden im elektromechanischen Wandlerelement die Ultraschallwellen als akustische Signale erzeugt und über das Koppelelement zur Rohrwandung geführt und von dort in das Fluid bzw. das Messmedium geleitet.

Bei Clamp-On-Ultraschall-Durchflussmessgeräten kann sich je nach Ausgestaltung der Messstelle eine komplexe Messabweichung ergeben, welche von verschiedenen Einflussfaktoren abhängt.

Es ist daher Aufgabe der vorliegenden Erfindung ein Verfahren bereitzustellen, welches es ermöglicht zur Einschätzung der Messabweichung und ggf. zur Kompensation dieser Messabweichung eine charakteristische Größe zu ermitteln.

Die vorliegende Erfindung löst diese Aufgabe durch ein Verfahren mit den Merkmalen des Anspruchs 1.

Vorteilhafte Ausgestaltungen der Erfindung sind Gegenstand der Unteransprüche.

Ein erfindungsgemäßes Verfahren zur Ermittlung einer charakteristischen Größe zur Bewertung einer Messanordnung umfassend ein Clamp-On-Ultraschall-Durchflussmessgerät und ein Rohr an welchem das Clamp-On-Ultraschall-Durchflussmessgerät befestigt ist und/oder zur Bewertung des Messbetriebs dieser Messanordnung, beinhaltet die folgenden Schritte:

A Bereitstellen von Kennwerten bezüglich des durch das Clamp-On-Ultraschall-Durchflussmessgerät erzeugten Anregungssignals;
B Bereitstellen von sensorspezifischen Daten hinsichtlich der akustischen Eigenschaften eines oder mehrerer Ultraschallwandler des Clamp-On-Ultraschall-Durchflussmessgerätes;
C Eingabe von Daten bezüglich des Rohrmaterials und der Rohrwandstärke, insbesondere durch einen Nutzer,
D Ermittlung der charakteristischen Größe aus den Kennwerten und Daten der Schrittes A-C anhand eines mathematischen Modells, umfassend die Schritte:

i) Berechnen einer Systemantwort anhand des mathematischen Modells;
ii) Automatisierte Auswertung der Systemantwort zur Bestimmung der charakteristischen Größe; und

F3) Initiierung einer Fehlerdiagnose anhand der charakteristischen Größe, bei welcher die Daten der Schritte A-C auf Kompatibilität überprüft werden.

Bei der ermittelten charakteristischen Größe handelt es sich dabei um den Winkel, unter dem sich der Schall vorrangig durch das im Rohr befindliche Fluid ausbreitet.

Das Verfahren kann als reines Simulationsprogramm z.B. in einer Verkaufsplattform realisiert sein, um zu testen ob die Messstelle mit dem jeweiligen Clamp-On-Ultraschall-Durchflussmesser kompatibel ist. Alternativ kann es auch im Messgerät oder in einem Leitsystem implementiert sein.

Bekanntermaßen muss bei Clamp-On-Systemen beachtet werden, dass der Ultraschall mehrere unterschiedliche Materialschichten durchlaufen muss, bis er in das Messmedium eintritt. Die charakteristische Größe, so z.B. der Winkel mit welchem das Ultraschallsignal von der Rohrwand in das Medium eintritt, hängt u.a. von der Spezifikation der im Ultraschallwandler genutzten Materialkomponenten und der geometrischen Ausgestaltung, z.B. dem Keilwinkel, ab und kann von Wandler zu Wandler wechseln. Die Eigenschaften und Charakteristika der einzelnen Materialien können jedoch nur teilweise werksseitig, beispielsweise aufgrund von Fertigungstoleranzen und unterschiedlichen Temperaturabhängigkeiten, voreingestellt werden und bei der Messung berücksichtigt werden.

So ist es z.B. möglich einzelne sensorspezifische Daten des Ultraschallwandlers bereits in einer Datenbank zu hinterlegen. Dies betrifft z.B. den Durchmesser des elektromechanischen Wandlerelements, Daten (Keilwinkel und Materialeigenschaften) bezüglich eines oder mehrerer Koppelkörper und das Übertragungsverhalten, insbesondere die Mittenfrequenz und die Bandbreite, des Ultraschallwandlers einzeln oder in Form einer Formel zu hinterlegen. Es besteht allerdings auch die Möglichkeit, dass das Bereitstellen dieser Daten nicht bereits werksseitig in einer Datenbank erfolgt, sondern durch den Kunden oder einen Servicetechniker vor Ort vorgenommen wird.

Ein weiterer Einflussfaktor gemäß der Lehre der Erfindung ist im Anregungssignal zu sehen. Hier sind insbesondere die Bandbreite und die Anregungsfrequenz relevant, welche zumeist, ggf. mit weiteren Angaben, in einer Anregungsfunktion zusammengefasst werden können. Auch die Kennwerte des Anregungssignals sind werksseitig festlegbar und können bereits in einer Datenbank hinterlegt sein oder durch den Nutzer durch Eingabe bereitgestellt werden.

Entsprechend mathematische Modelle sind aus der Fachliteratur bekannt. Beispielsweise wird entsprechendes mathematisches Modell z.B. im Artikel "Acoustic Transfer Function of the Clamp-On Flowmeter von Funck und Mitzkus (IEEE Transactions on Ultrasonics, Ferroelectrics, and Frequency Control, Vol. 43, No. 4, 1996, S. 569-575) beschrieben.

Angaben bezüglich der Messstelle müssen gesondert eingestellt werden und können zumeist nicht voreingestellt werden. Dazu gehören insbesondere das Rohrmaterial und die Rohrwandstärke. Der Rohrdurchmesser wird dabei nicht zwingend zur Ermittlung der relativen Messabweichung benötigt, sondern lediglich zur Bestimmung des Durchflusses und folglich der absoluten Messabweichung des Durchflusses.

Außerdem kann die Vorort-Installation bei Clamp-On-Ultraschallwandlern oftmals über eine oder über zwei oder über mehrere Traversen erfolgen. Dies kann ebenfalls bei der Ermittlung der charakteristischen Größe berücksichtigt werden.

Es ist von Vorteil, wenn zusätzlich zu den Schritten A-D) in einem Schritt F1) durch einen Ist-/Sollwertvergleich anhand der charakteristischen Größe die Ausgabe einer bauartbedingten und/oder anregungsbedingten Fehlermeldung erfolgt.

Außerdem vorteilhaft kann zu den Schritten A-D) in einem Schritt F2) eine quantifizierte Ausgabe der charakteristischen Größe oder einer aus der charakteristischen Größe berechneten Messabweichung erfolgen.

Gemäß dem erfindungsgemäßen Verfahren wird im Schritt F3) anhand der charakteristischen Größe eine Fehlerdiagnose initiiert, bei welcher die Daten der Schritte A-C auf Kompatibilität überprüft werden. So kann anhand von einer Datenbank überprüft werden, welche Daten signifikant außerhalb des Standardabweichungsbereichs liegen.

Die ermittelte charakteristische Größe ist Fluid-Winkel, unter welchem sich der Schall vorrangig durch das im Rohr befindliche Fluid ausbreitet. Anhand dieses Winkels kann eine Einschätzung erfolgen, ob eine Messabweichung vorliegt und wie hoch diese ist.

Es ist von Vorteil, wenn die Kennwerte bezüglich des Anregungssignals des Clamp-On-Durchflussmessgerätes gemäß Schritt A ausgesucht sind aus folgenden Werten:

die Anregungsfrequenz des Anregungssignals
die Bandbreite des Anregungssignals
die Folgefrequenz der Anregungszyklen
die Signalart z.B. Sinus- oder Rechtecksignal und/oder
Art des Funktionsfensters z.B. Rechteck-, von Hann- oder Tukey-Fenster.

Es ist von Vorteil, wenn die sensorspezifischen Daten des Clamp-On-Ultraschallgerätes ausgesucht aus folgenden Werten:

der Durchmesser des elektromechanischen Wandlerelements, z.B. der Piezokeramik, eines jeweiligen Ultraschallwandlers,
der Keilwinkel des Koppelkörpers des jeweiligen Ultraschallwandlers,
die Schallgeschwindigkeit innerhalb des Koppelkörpers des jeweiligen Ultraschallwandlers, und/oder
die elektrische Übertragungsfunktion des jeweiligen Ultraschallwandlers, insbesondere die Mittenfrequenz und die Bandbreite des Ultraschallwandlers.

Selbstverständlich können auch mehrere Koppelkörper in einem Ultraschallwandler vorgesehen sein.

Es sind zudem Ultraschallwandler mit mehreren übereinander geordneten Piezokeramiken bekannt. Derartige gestapelte Anordnungen sind als ein elektromechanisches Wandlerelement zu verstehen.

Die sensorspezifischen Daten gemäß Anspruch 6 und/oder die Kennwerte des Anregungssignals gemäß Anspruch 5 können vorteilhaft in einer Funktion zusammengefasst sein, welche bereitgestellt wird.

Das Bereitstellen der Kennwerte in Schritt A und/oder das Bereitstellen der sensorspezifischen Daten kann dadurch erfolgen, dass sie als Datensatz für das jeweilige Clamp-On-Durchflussmessgerät in einem Datenspeicher eines Datenverarbeitungssystems hinterlegt sind und von diesem bereitgestellt werden.

In einem zusätzlichen Schritt X können zudem Informationen bezüglich des Aufbaus der Messstelle, insbesondere der Anzahl der Traversen und damit der Anordnung der Ultraschallwandler am Rohr, bereitgestellt werden, welche vom mathematischen Modell bei der Ermittlung des Messabweichungsfaktors berücksichtigt werden.

Erfindungsgemäß ist ein Computerprogrammprodukt vorgesehen, mit welchem das Verfahren gemäß einem der Ansprüche 1 bis 8 - ausgeführt wird, wobei das Computerprogrammprodukt auf dem mathematischen Modell basiert und unter Verwendung der Kennwerte und Daten der Schritte A-C nach Anspruch 1, und ggf. des zusätzlichen Schritts X, einen Messabweichungsfaktor ermittelt, welcher zur Fehlerdiagnose geeignet ist.

Erfindungsgemäß ist ein Clamp-On-Ultraschall-Durchflussmessgerät vorgesehen, umfassend zumindest ein außen an einer Rohrleitung festlegbarer Ultraschallwandler und eine Auswerteeinheit welche ausgelegt ist zur Durchführung des Verfahrens nach einem der Ansprüche 1 bis 8 und welche anhand des ermittelten Messabweichungsfaktors eine Korrektur der Messabweichung in Echtzeit durchführt.

Das Clamp-On-Ultraschall-Durchflussmessgerät kann die Durchflussgeschwindigkeit und/oder den Volumendurchfluss anhand der Laufzeitdifferenz ermitteln. In diesem Fall werden zwei Ultraschallwandler benötigt. Alternativ kann das Clamp-On-Ultraschall-Durchflussmessgerät auch lediglich einen Ultraschallwandler aufweisen und nach dem Doppler-Prinzip die Durchflussgeschwindigkeit ermitteln.

Nachfolgend wird die Erfindung anhand eines Ausführungsbeispiels und anhand der beigefügten Figuren näher erläutert. Es zeigen:

Fig. 1 schematische Darstellung eines sogenannten Clamp-On-Ultraschall-Durchflussmessgerätes;

Fig. 2 exemplarisches Diagramm einer frequenzabhängigen Messabweichung; und

Fig. 3 exemplarisches Diagramm der relativen Messabweichung zur Winkelabweichung;

Fig. 4 exemplarischer Kurvenverlauf eines elektrischen Anregungssignals;

Fig. 5 Darstellung eines normierten einseitigen Amplitudenspektrums eines Anregungssignals; und

Fig. 6 beispielhafte Darstellung einer Systemantwort.

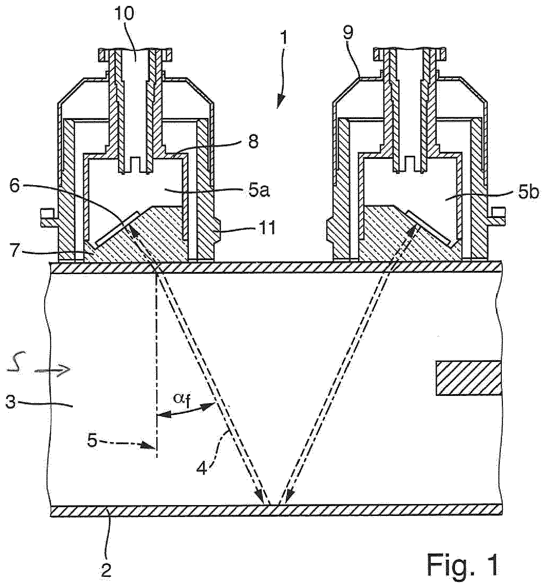

Fig. 1 zeigt eine Anordnung mit einem Clamp-On-Ultraschall-Durchflussmessgerät 1 im installierten Zustand an einer Rohrleitung 2. In der Rohrleitung 2 befindet sich ein Messmedium 3, welches idealerweise die Rohrleitung 2 in Strömungsrichtung S durchfließt.

Das schematisch dargestellte Clamp-On-Ultraschall-Durchflussmessgerät 1 besteht vorzugsweise aus zwei Ultraschallwandlern 5a und 5b welche von außen auf das Messrohr aufgesetzt sind und lösbar oder unlösbar mit der Rohrleitung 2 verbunden sind. In der dargestellten Variante handelt es sich um eine sogenannte Zwei-Traversen-Anordnung, es sind allerdings auch andere Anordnungen, so z.B. eine Ein-Traversen-Anordnung, denkbar.

Der in Fig. 1 dargestellte Ultraschallwandler 5a ist mittels eines Halteelements 11 zur Festlegung des Ultraschallwandlers 5a an der Rohrleitung 2 montiert. Das Halteelement 11 und der Ultraschallwandler 5a sind Teil einer Ultraschallwandler-Anordnung. Der Ultraschallwandler 5a weist ein Gehäuse 9 auf und welches mit dem Halteelement 11 verbindbar, so z.B. verklemm- oder verrastbar ist.

Ein entsprechender Ultraschallwandler 5a weist ein elektromechanisches Wandlerelement 6, z.B. ein Piezoelement, auf. Dieses ist über eine elektrische Verbindung, z.B. ein Kabel, mit einer nicht näher dargestellten Auswerteeinheit verbunden. Die entsprechende Verbindung ist dabei durch eine zylindrische Kabelführung 10 mit einer Längsachse senkrecht zur Rohrleitung 2 vom elektromechanischen Wandlerelement 6 weggeführt.

Der Ultraschallwandler 5a weist zudem zwischen dem elektromechanischen Wandlerelement 6 und der Rohrleitung 2 einen Koppelkörper 7 auf, welcher eine Auflagefläche zum Messrohr hin beinhaltet und eine gegenüber dieser Auflagefläche gekippte Fläche zur Anordnung des elektromechanischen Wandlerelements 6 umfasst.

Das Clamp-On-Ultraschall-Durchflussmessgerät, insbesondere das elektromechanische Wandlerelement 6 des Ultraschallwandlers 5a, sendet zur Ermittlung eines Durchflusses oder einer Durchflussgeschwindigkeit während der Messung ein Ultraschallsignal mit dominanter Sendefrequenz $f_{ex}$ aus, welches durch den Ultraschallwandler 5b empfangen wird.

Die Messung erfolgt nach dem Laufzeitdifferenzprinzip. Daher werden Ultraschallsignale einmal schräg in und einmal schräg entgegen der Strömungsrichtung S ausgesandt und empfangen. Bei der Wahl der Anregungsfrequenz $f_{ex}$ des elektromagnetischen Wandlerelements 6 ist es bekannt sich an der Mittenfrequenz des Wandlerelements 6 zu orientieren.

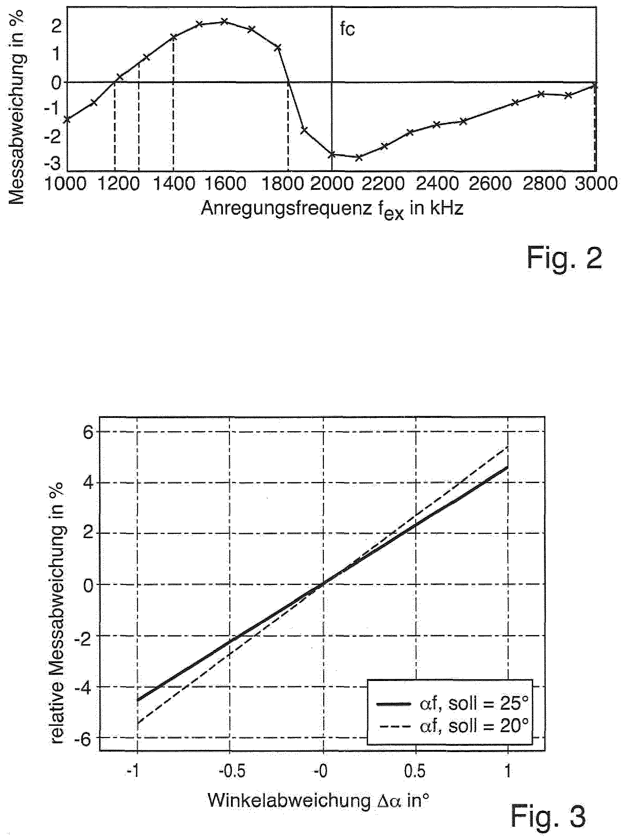

Es hat sich allerdings gezeigt, dass bei der Auswahl der Mittenfrequenz als Anregungsfrequenz nicht immer die optimale Wahl für den Betrieb eines Ultraschall-Durchflussmessgerätes ist. Fig. 2 zeigt eine Darstellung wie sich die Messabweichung im Frequenzbereich eines Ultraschallwandlers ändert. Diese Kurve wurde auf einer Rundlaufanlage bei einem Volumenstrom von 20 l/s ermittelt. Die beiden Ultraschallwandler des Clamp-On-Systems sind an einem DN80 Rohr aus Stahl mit einer Rohrwandstärke von 2 mm befestigt. Die Mittenfrequenz $f_c$ beträgt 2 MHz. Wie man erkennt, ist die relative Messabweichung im Bereich der Mittenfrequenz bei dieser Anordnung relativ hoch.

Eine Gesamtmessabweichung des Clamp-On-Messgerätes umfasst jedoch neben der frequenzabhängigen Messabweichung weitere Komponenten, welche es zugunsten einer möglichst genauen Messung zu reduzieren gilt.

Ein entsprechender Verfahrensablauf wird nachfolgend beschrieben. Zunächst erfolgen Angaben seitens des Kunden. Dies umfasst

A1 Rohrmaterial
B1 Rohrwandstärke

Zudem können weitere Angaben seitens des Kunden erfolgen. Dies umfasst:

A2 Angaben zur Messanordnung, insbesondere die Anzahl der Traversen

Diese optionalen Angaben können allerdings auch in einer Datenbank im Messgerät für eine konkrete Montageanordnung hinterlegt sein. So ist es z.B. möglich, dass das Gerät immer in einer Zwei-Traversen-Anordnung, wie in Fig. 2 dargestellt, zu montieren ist. Falls diese Vorschrift existiert bedarf es keiner gesonderten Angabe. Es kann auch sein, dass die Mittenfrequenz und/oder die Bandbreite des Anregungssignals bereits im Gerät hinterlegt sind.

Weiterhin in der Datenbank im Gerät hinterlegt ist die elektrische Übertragungsfunktion des jeweiligen Ultraschallwandlers mit einer jeweiligen ersten Bandbreite und einer jeweiligen ersten Mittenfrequenz. Bei zwei Ultraschallwandlern sind somit zumindest zwei Übertragungsfunktionen hinterlegt. Weiterhin in der Datenbank im Gerät hinterlegt ist für jeden Ultraschallwandler mindestens jeweils eine elektrische Übertragungsfunktion mit einer jeweiligen ersten Bandbreite und einer jeweiligen ersten Mittenfrequenz für mindestens eine Temperatur des jeweiligen Ultraschallwandlers. Es können aber auch mehrere elektrische Übertragungsfunktionen pro Ultraschallwandler für mehrere Temperaturbereiche oder Temperaturen hinterlegt sein.

Weiterhin ist in der Datenbank im Gerät eine mechanische Übertragungsfunktion des Rohres bzw. der Rohrleitung, z.B. von Frequenz und Fluid-Winkel abhängige Durchlässigkeitskoeffizienten, hinterlegt. Es können aber auch mehrere mechanische Übertragungsfunktionen für das Rohr für mehrere Temperaturbereiche oder Temperaturen hinterlegt sein.

Diese elektrischen Übertragungsfunktionen des oder der jeweiligen Ultraschallwandler werden zudem durch sensorspezifische Daten ergänzt, welche ausgesucht sind aus der folgenden Gruppe und welche im Gerät hinterlegt oder seitens des Nutzers eingegeben wurden:

A3 der Durchmesser der Piezokeramik,
B3 der Keilwinkel des Koppelkörpers,
C3 die Schallgeschwindigkeit innerhalb des Koppelkörpers,
D3 Übertragungsfunktion des/der Ultraschallwandler(s), und/oder
E3 Übertragungsfunktion des Rohres bzw. der Rohrleitung

Weiterhin sind Kennwerte bezüglich eines Anregungssignals in der Datenbank hinterlegt oder werden durch den Nutzer eingegeben. Diese Kennwerte sind ausgesucht aus der folgenden Gruppe:

A4 die Anregungsfrequenz des Anregungssignals
B4 die Bandbreite des Anregungssignals
C4 die Anzahl der Anregungszyklen
D4 die Signalart z.B. Sinus- oder Rechtecksignal und/oder
E4 Art des Funktionsfensters z.B. Rechteck-, von Hann- oder Tukey-Fenster.

Diese Informationen können einzeln oder als Parameter in einer Funktion angegeben werden oder hinterlegt sein.

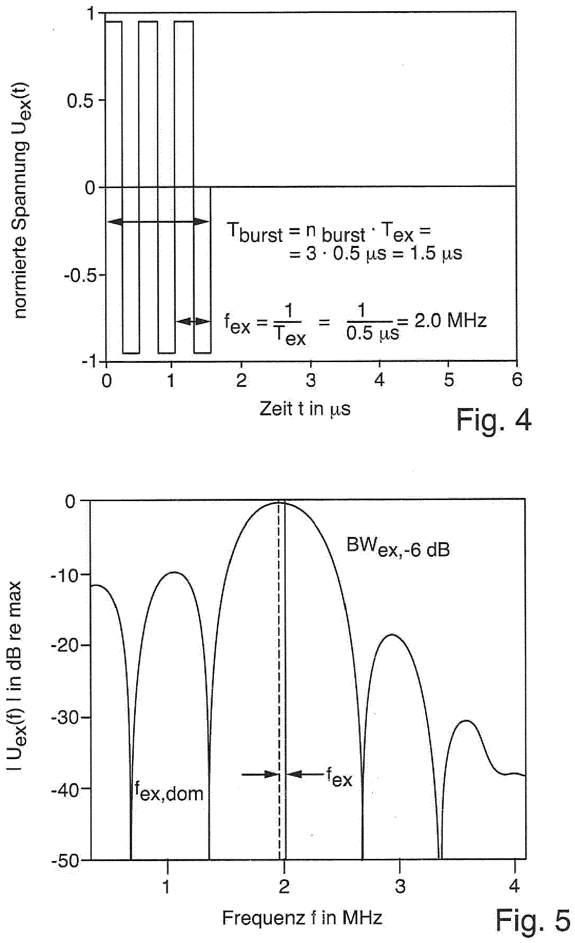

Fig. 4 zeigt exemplarisch ein entsprechendes Anregungssignal innerhalb eines Zeitbereichs. Die Anregungsfrequenz beträgt 2 MHz. Der Signaltyp ist ein Rechtecksignal. Die Anzahl der sogenannten bipolaren Bursts beträgt drei. Bipolar bedeutet dass das Signal im positiven und negativen Spannungsbereich verläuft. In der Fig. 4 ist der Wert auf eins normiert, da die eigentliche Spannung für die Funktionsweise des Geräts irrelevant ist, da von einem sogenannten linearen zeitinvarianten System (LTI) ausgegangen wird. Das gezeigte Signal dauert $t_{burst}$=1,5 $\mu$s. Die Anregungsfrequenz und die Anzahl der Bursts können variabel gewählt werden. Die Anregungsfrequenz $f_{ex}$ ergibt sich als Kehrwert der Dauer eines Rechtecks $T_{ex}$.

Aus dem Anregungssignal der Fig. 4 lässt sich durch Berechnung der FourierTransformation, als Standardmethode der digitalen Signalverarbeitung, das dazugehörige Spektrum ermittelt. Dieses teilt man typischerweise in ein Phasen- und ein Amplitudenspektrum auf. Das normierte einseitige Amplitudensignal ist in Fig. 5 dargestellt. In das Spektrum wurde die Anregungsfrequenz $f_{ex}$ und die stärkste (dominante) Frequenz $f_{ex,dom}$ eingezeichnet. Die Abweichung ist nicht intuitiv und lässt sich durch den spektralen Leck-Effekt (spectral leakage) erklären. Das Signal ist ferner durch die Bandbreite, z.B. die Breite der Hauptkeule bei -6 dB charakterisiert. Ein weiteres Charakteristikum ist die Dämpfung der stärksten Nebenkeule.

Weiterhin ist auf einem Datenträger im Messgerät ein mathematisches Modell hinterlegt.

Dem Modell kann das in Fig. 5 dargestellte Spektrum (Betrag und Phase) als Eingangsdaten zugeführt werden. Die Besonderheit an dem Modell ist, dass zusätzlich zur Frequenzinformation auch eine Winkelinformation berücksichtigt wird. Alle Komponenten des Modells werden deswegen als zweidimensionale Filter mit Abhängigkeit von der Frequenz und der Phasengeschwindigkeit modelliert.

Ein typisches Modell, welches nur den Frequenzbereich berücksichtigt, kann mit der Formel

$$Y(f) = \prod A_n(f) \cdot X(f)$$

beschrieben werden, wobei $X(f)$ dem Spektrum der Anregung entspricht und $A_n(f)$ der Übertragungsfunktion der n-ten Modell-Komponente. $Y(f)$ ist sodann die Systemantwort.

Entsprechende mathematische Modelle, die nur den Frequenzbereich berücksichtigen wurden bereits in folgenden Dokumenten erörtert:

Ali, M.; Raouf Mohamed, A.: A simulation of pulse-echo amplitude scan signal formation in absorbing media. In: Ultrasonics, 30(5), 1992, S. 311-316, insbesondere Gleichung 7 und
Wöckel, S., Steinmann, U., Auge, J.: Signalanalyse für Ultraschall-Clamp-on-Systeme. In: tm — Technisches Messen, 81(2), 2014, S. 86-92, insbesondere Gleichung 2.

Zusätzlich zur Eingabe der Werte des Rohrmaterials und der Rohrwandstärke greift das mathematische Modell auf die im Datenspeicher hinterlegten Werte bezüglich der elektrischen Übertragungsfunktion der Ultraschallwandler, deren Geometrie- und Materialdaten sowie die Kennwerte des Anregungssignals zurück.

Aus diesen Daten kann die Ermittlung eines tatsächlichen Fluid-Winkels $\alpha_f$ erfolgen, unter welchem sich der Schall vorrangig in der im Rohr befindlichen Flüssigkeit ausbreitet. Dieser Fluid-Winkel $\alpha_f$ ist der Messabweichungsfaktor im Sinne der vorliegenden Erfindung, mit weichem eine Messabweichung ermittelt und ggf. auch kompensiert werden kann. Siehe dazu z.B. den Artikel "Extraction of Spatial Ultrasonic Wave Packet Features by Exploiting a Modified Hough Transform" von Ploß, P., Rupitsch, S. J. und Lerch, R. (IEEE Sensors Journal, 14(7), 2014) beschrieben wird.

Ein erweitertes Modell berücksichtigt auch den Fluid-Winkel. Es wird wie folgt angegeben:

$$Y(f, \alpha_f) = \prod_n A_n(f, \alpha_f) \cdot X(f, \alpha_f) \, ,$$

also wie beim vorgenannten eindimensionalen Modell, nur das sowohl die Komponenten, als auch der Ein-/Ausgang zusätzlich zur Frequenz von einem Winkel abhängen.

Mathematische Modelle, welche die Ortsinformationen bzw. den Winkel berücksichtigen, finden sich in folgenden Dokumenten:

Pavlakovic, B. N.; Rose, J. L.: The Influence of Finite-Size Sources in Acousto-Ultrasonics / NASA. 1994 (195374). - Forschungsbericht, insbesondere S. 70 und
Funck, B.; Mitzkus, A.: Acoustic transfer function of the clamp-on flowmeter. In: IEEE Transactions on Ultrasonics Ferroelectrics and Frequency Control, 43(4), 1996, S. 569-575, insbesondere Gleichungen 27 und 33.

Die Winkelinformation $\alpha_n$ eines Mediums n lässt sich mit der Schallgeschwindigkeit des Mediums $n$ in die Phasengeschwindigkeit $c_p^0$ umrechnen:

$$c_p^0 = \frac{c_n}{\sin(\alpha_n)}$$

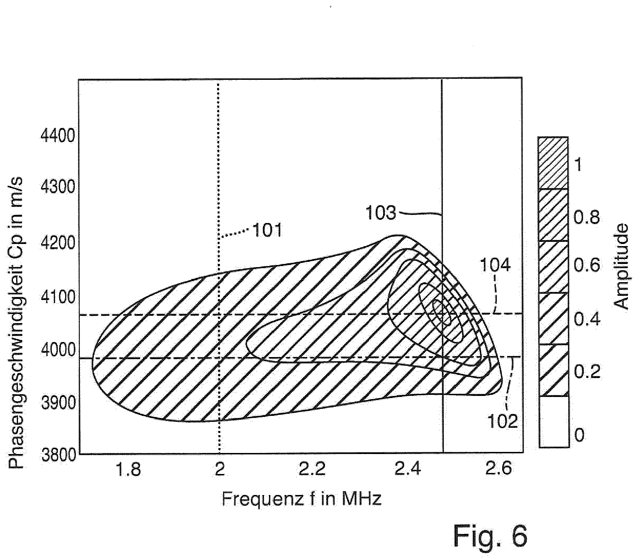

In Figur 6 ist das zweidimensionale Amplitudenspektrum, der mit dem Modell berechneten, Systemantwort gezeigt.

Mit Bezugszeichen 101 ist die elektrische Anregungsfrequenz $f_{ex}$ = 2 MHz eingezeichnet und bezeichnet.

Mit Bezugszeichen 102 ist die erwartete Phasengeschwindigkeit $c_p^0$ und eingezeichnet bzw. bezeichnet. Sie wird über das Snellius'sche Brechungsgesetz berechnet und umgewandelt in eine Winkelinformation entspricht sie, für Wasser mit Schallgeschwindigkeit 1485 m/s, dem erwarteten Fluid-Winkel $\alpha_f^0$ und beträgt etwa 22 °. Das ist der Fluid-Winkel, der für die Berechnung des Volumenstroms maßgeblich ist. Weicht dieser Winkel im Wasser vom erwarteten Winkel ab, so führt dies zu einer Messabweichung des Volumenstroms.

Die Systemantwort hat die Form eines "Auges", dessen Pupille (Maximum) an einer gewissen Stelle des zweidimensionalen Koordinatensystems (Frequenz, Phasengeschwindigkeit bzw. Winkel) liegt. Würde die Rohrwand die Schallausbreitung nicht beeinflussen, dann läge das Maximum des Auges auf dem Schnittpunkt der Linien 101 und 102.

Da jedoch die Rohrwand einen signifikanten Einfluss auf die Schallausbreitung hat, ist die Lage des Auges deutlich vom erwarteten Schnittpunkt verschoben. Die Systemantwort lässt sich nun automatisiert auswerten - und zwar auf mehrerlei Arten. Die einfachste Auswertemöglichkeit besteht darin das Maximum zu bestimmen und die Koordinaten desselben zu extrahieren ($f_{rec,dom}$ 103 und $c_{p,rec,dom}$ 104). Die Abweichung in der Vertikalen (Änderung der Phasengeschwindigkeit $c_{p,rec,dom} - c_p^0$) ist direkt in eine Änderung des Fluid-Winkels umrechenbar. Darüber lässt sich eine Messabweichung vorhersagen.

Es gibt jedoch auch verschiedene andere Möglichkeiten die Systemantwort auszuwerten.

Bei der Ermittlung des Messabweichungsfaktors können optional auch Angaben zur Messanordnung berücksichtigt werden.

Zusätzlich zur Ermittlung und ggf. Kompensation einer Messabweichung kann aufgrund des Messabweichungsfaktors auch lediglich eine Fehlerwarnung erfolgen, sofern dieser Faktor einen vorgegebenen Sollwert über- oder unterschreitet. Diese Fehlerwarnung kann dem Nutzer z.B. anzeigen, dass eine Situation bzw. eine Konfiguration vorliegt, welche zu einer großen Messabweichung führen kann. So kann auch im Rahmen einer Vorabanalyse z.B. in einem Internetverkaufsportal nach Eingabe des Rohrmaterials und der Rohrwandstärke ein Messabweichungsfaktor für alle angebotenen Clamp-On-Messgeräte ermittelt werden und das geeignetste Produkt vorgeschlagen werden.

Durch Abgleich des durch das mathematische Modell ermittelten Messabweichungsfaktors mit einem tatsächlich gemessenen Messabweichungsfaktor können zudem Temperatureinflüsse, Ablagerungen oder Abrasion an der Rohrwandung während der Messung identifiziert werden.

Fig. 3 zeigt die Messwertabweichung in Prozent von der eigentlichen Winkelabweichung in Grad. Diese Winkelabweichung kann nur unter Zuhilfenahme bestimmter Parameter, wie sie vorhergehend beschrieben wurden, bestimmt werden. Die Winkelabweichung lässt eine direkte Aussage zur Messwertabweichung zu und ermöglicht eine Quantifizierung und sogar eine Kompensation der Messwertabweichung, so dass eine hochgenaue Messung bei Clamp-On-Ultraschall-Durchflussmessgeräten erreicht werden kann.

**Patentansprüche**

1. Verfahren zur Ermittlung einer charakteristischen Größe zur Bewertung einer Messanordnung, umfassend ein Clamp-On-Ultraschall-Durchflussmessgerät und ein Rohr an welchem das Clamp-Ultraschall-Durchflussmessgerät befestigt ist, und/oder zur Bewertung des Messbetriebs dieser Messanordnung, wobei die ermittelte charakteristische Größe der Winkel ist, unter welchem sich der Schall vorrangig durch das im Rohr befindliche Fluid ausbreitet, **gekennzeichnet durch** die folgenden Schritte:

   A) Bereitstellen von Kennwerten bezüglich des durch das Clamp-On-Ultraschall-Durchflussmessgerät erzeugten Anregungssignals;
   B) Bereitstellen von sensorspezifischen Daten hinsichtlich der akustischen Eigenschaften eines oder mehrerer Ultraschallwandler des Clamp-On-Ultraschall-Durchflussmessgerätes;
   C) Eingabe von Daten bezüglich des Rohrmaterials und der Rohrwandstärke, insbesondere durch einen Nutzer;
   D) Ermittlung der charakteristischen Größe aus den Kennwerten und Daten der Schritte A-C anhand eines mathematischen Modells, umfassend die Schritte:

      i Berechnen einer Systemantwort anhand des mathematischen Modells;

      ii Automatisierte Auswertung der Systemantwort zur Bestimmung der

   F3) charakteristischen Größe; Initiierung einer Fehlerdiagnose anhand der charakteristischen Größe, bei welcher die Daten der Schritte A-C auf Kompatibilität überprüft werden.

2. Verfahren nach Anspruch 1, **dadurch gekennzeichnet, dass** zusätzlich zu den Schritten A-D) in einem Schritt F1) durch einen Ist-/Sollwertvergleich anhand der charakteristischen Größe die Ausgabe einer bauartbedingten Fehlermeldung erfolgt.

3. Verfahren nach Anspruch 1 oder 2, **dadurch gekennzeichnet, dass** zusätzlich zu den Schritten A-D) in einem Schritt F2) eine quantifizierte Ausgabe der charakteristischen Größe oder einer aus der charakteristischen Größe berechneten Messabweichung erfolgt.

4. Verfahren nach einem der vorhergehenden Ansprüche, **dadurch gekennzeichnet, dass** die Kennwerte bezüglich des Anregungssignals des Clamp-On-Durchflussmessgerätes gemäß Schritt A ausgesucht sind aus folgenden Werten:

   die Anregungsfrequenz des Anregungssignals
   die Bandbreite des Anregungssignals
   die Folgefrequenz der Anregungszyklen
   die Signalart z.B. Sinus- oder Rechtecksignal und/oder
   Art des Funktionsfensters z.B. Rechteck-, von Hann- oder Tukey-Fenster.

5. Verfahren nach einem der vorhergehenden Ansprüche, **dadurch gekennzeichnet, dass** die sensorspezifischen Daten des Clamp-On-Ultraschallgerätes ausgesucht sind aus folgenden Werten:

   der Durchmesser des elektromechanischen Wandlerelements eines jeweiligen Ultraschallwandlers,
   der Keilwinkel des Koppelkörpers des jeweiligen Ultraschallwandlers,
   die Schallgeschwindigkeit innerhalb des Koppelkörpers des jeweiligen Ultraschallwandlers, und
   die elektrische Übertragungsfunktion des jeweiligen Ultraschallwandlers, insbesondere die Mittenfrequenz und die Bandbreite des Ultraschallwandlers.

6. Verfahren nach einem der vorhergehenden Ansprüche, **dadurch gekennzeichnet, dass** die sensorspezifischen Daten gemäß Anspruch 5 und/oder die Kennwerte des Anregungssignals gemäß Anspruch 4 in einer Funktion zusammengefasst sind, welche bereitgestellt wird.

7. Verfahren nach einem der vorhergehenden Ansprüche, **dadurch gekennzeichnet, dass** das Bereitstellen der Kennwerte in Schritt A und/oder das Bereitstellen der sensorspezifischen Daten dadurch erfolgt, dass sie als Datensatz für das jeweilige Clamp-On-Durchflussmessgerät in einem Datenspeicher eines Datenverarbeitungssystems hinterlegt sind und von diesem bereitgestellt werden.

8. Verfahren nach einem der vorhergehenden Ansprüche, **dadurch gekennzeichnet, dass** in einem zusätzlichen Schritt X Informationen bezüglich des Aufbaus der Messstelle bereitgestellt werden, welche vom mathematischen Modell bei der Ermittlung des Messabweichungsfaktors berücksichtigt werden.

9. Computerprogrammprodukt mit welchem das Verfahren gemäß einem der vorherigen Ansprüche ausgeführt wird, wobei das Computerprogrammprodukt auf dem mathematischen Modell basiert und unter Verwendung der Kennwerte und Daten der Schritte A-C nach Anspruch 1, und ggf. de Schritts X nach Anspruch 8, einen Messabweichungsfaktor ermittelt, welcher zur Fehlerdiagnose geeignet ist.

10. Clamp-On-Ultraschall-Durchflussmessgerät umfassend zumindest zwei außen an einer Rohrleitung festlegbare Ultraschallwandler und eine Auswerteeinheit welche ausgelegt ist zur Durchführung des Verfahrens nach einem der Ansprüche 1 bis 8 und welche anhand eines ermittelten Messabweichungsfaktors eine Korrektur der Messabweichung in Echtzeit durchführt.

11. Clamp-On-Ultraschall-Durchflussmessgerät nach Anspruch 10, **dadurch gekennzeichnet, dass** das Clamp-On-Ultraschall-Durchflussmessgerät zumindest einen Ultraschallwandler aufweist und eine Auswerteeinheit, welche ausgelegt ist zur Ermittlung des Winkels mit welchem das Ultraschallsignal von der Rohrwand in das Medium eintritt.

**Claims**

1. Procedure designed to determine a characteristic variable to assess a measuring arrangement, comprising a clamp-on ultrasonic flowmeter and a pipe on which the clamp-on ultrasonic flowmeter is fixed, and/or to assess the operation of said measuring arrangement,

   wherein the characteristic variable determined is the angle at which the sound primarily propagates through the fluid located in the pipe,

wherein said procedure is **characterized by** the following steps:

   A) Provision of characteristic values with regard to the excitation signal generated by the clamp-on ultrasonic flowmeter;
   B) Provision of sensor-specific data with regard to the acoustic characteristics of one or more ultrasonic transducers of the clamp-on ultrasonic flowmeter;
   C) Entry of data regarding the pipe material and the pipe wall thickness, particularly by a user;
   D) Determination of the characteristic variable from the characteristic values and data of Steps A to C using a mathematical model comprising the following steps:

   i Calculation of a system response using the mathematical model;
   ii Automated evaluation of the system response in order to determine the characteristic variable;

   F3) Initiation of fault diagnostics on the basis of the characteristic variable, whereby the compatibility of the data of Steps A-C is checked.

2. Procedure as claimed in Claim 1, **characterized in that**, in addition to Steps A-D), an error message, caused by design conditions, is output in a Step F1) by comparing the actual/target value on the basis of the characteristic variable.

3. Procedure as claimed in Claim 1 or 2, **characterized in that**, in addition to Steps A-D), a Step F2) involves the outputting, in a quantified manner, of the characteristic variable or a deviation calculated from the characteristic variable.

4. Procedure as claimed in one of the previous claims, **characterized in that** the characteristic values regarding the excitation signal of the clamp-on flowmeter according to Step A are selected from the following values:

   the excitation frequency of the excitation signal
   the bandwidth of the excitation signal
   the repetition frequency of the excitation cycles
   the type of signal, e.g. a sinusoidal signal or square wave signal and/or
   the type of function window, e.g. a rectangular window, a Hann window or a Tukey window.

5. Procedure as claimed in one of the previous claims, **characterized in that** the sensor-specific data of the clamp-on ultrasonic flowmeter are selected from the following values:

the diameter of the electromechanical transducer element of a particular ultrasonic transducer,
the wedge angle of the coupling body of the particular ultrasonic transducer,
the sound velocity within the coupling body of the particular ultrasonic transducer, and
the electrical transmission function of the particular ultrasonic transducer, particularly the center frequency and the bandwidth of the ultrasonic transducer.

6. Procedure as claimed in one of the previous claims, **characterized in that** the sensor-specific data as claimed in Claim 5 and/or the characteristic values of the excitation signal as claimed in Claim 4 are combined in a function which is made available.

7. Procedure as claimed in one of the previous claims, **characterized in that** the characteristic values in Step A and/or the sensor-specific data are provided **in that** they are saved as a data record for the relevant clamp-on flowmeter in a data memory of a data processing system, and are made available by said system.

8. Procedure as claimed in one of the previous claims, **characterized in that**, in an additional Step X, information regarding the structure of the measuring point is made available, wherein said information is taken into consideration by the mathematical model when determining the deviation factor.

9. Computer program product with which the procedure as claimed in one of the previous claims is executed, wherein the computer program product is based on the mathematical model and determines - using the characteristics and the data of Steps A-C as claimed in Claim 1, and, where applicable, of Step X as claimed in Claim 8 - a deviation factor which is suitable for fault diagnostics.

10. Clamp-on ultrasonic flowmeter comprising at least two ultrasonic transducers which can be fixed on the outside of a pipe, and an evaluation unit which is designed to carry out the procedure as claimed in one of the Claims 1 to 8, and which corrects the deviation in real time on the basis of the deviation factor.

11. Clamp-on ultrasonic flowmeter as claimed in Claim 10, **characterized in that** the clamp-on ultrasonic flowmeter has at least one ultrasonic transducer and an evaluation unit which is designed to determine the angle at which the ultrasonic signal enters the medium from the pipe wall.

**Revendications**

1. Procédé destiné à la détermination d'une grandeur caractéristique pour l'évaluation d'un dispositif de mesure, comprenant un débitmètre à ultrasons clamp-on et une conduite sur laquelle est fixé le débitmètre à ultrasons clamp-on, et/ou à l'évaluation du fonctionnement dudit dispositif de mesure,

la grandeur caractéristique déterminée étant l'angle sous lequel le son se propage principalement dans le fluide se trouvant dans la conduite,
lequel procédé est **caractérisé par** les étapes suivantes :

A) Mise à disposition des valeurs caractéristiques relatives au signal d'excitation généré par le débitmètre à ultrasons clampon ;
B) Mise à disposition des données spécifiques au capteur concernant les caractéristiques acoustiques d'un ou de plusieurs transducteurs ultrasonores du débitmètre à ultrasons clamp-on ;
C) Introduction de données relatives au matériau de la conduite et à l'épaisseur de la paroi de conduite, notamment par un utilisateur ;
D) Détermination de la quantité caractéristique à partir des valeurs caractéristiques et des données des étapes A à C en utilisant un modèle mathématique comprenant les étapes suivantes :

i Calcul d'une réponse du système à l'aide du modèle mathématique ;
ii Exploitation automatisée de la réponse du système pour déterminer la grandeur caractéristique ;

F3) Déclenchement d'un diagnostic de défaut basé sur la grandeur caractéristique, pour laquelle les données des étapes A-C sont vérifiées en termes de compatibilité.

2. Procédé selon la revendication 1, **caractérisé en ce que**, en plus des étapes A-D), un message d'erreur lié à la construction est émis dans une étape F1) au moyen d'une comparaison valeur réelle/valeur de consigne sur la base de la variable caractéristique.

3. Procédé selon la revendication 1 ou 2, **caractérisé en ce que**, en plus des étapes A-D), une sortie quantifiée de la grandeur caractéristique ou d'un écart de mesure calculé à partir de la grandeur caractéristique a lieu dans une étape F2).

**4.** Procédé selon l'une des revendications précédentes, **caractérisé en ce que** les valeurs caractéristiques relatives au signal d'excitation du débitmètre clamp-on selon l'étape A sont choisies parmi les valeurs suivantes :

la fréquence d'excitation du signal d'excitation
la largeur de bande du signal d'excitation
la fréquence de répétition des cycles d'excitation
le type de signal, p. ex. un signal sinusoïdal ou rectangulaire et/ou
le type de fenêtre de fonction, p. ex. une fenêtre rectangulaire, une fenêtre de Hann ou une fenêtre de Tukey.

**5.** Procédé selon l'une des revendications précédentes, **caractérisé en ce que** les données spécifiques au capteur du débitmètre à ultrasons clamp-on sont choisies parmi les valeurs suivantes :

le diamètre de l'élément électromécanique d'un transducteur ultrasonore respectif,
l'angle de coin du corps de couplage du transducteur ultrasonore respectif,
la vitesse du son dans le corps de couplage du transducteur ultrasonore respectif, et
la fonction de transfert électrique du transducteur ultrasonore respectif, notamment la fréquence centrale et la largeur de bande du transducteur ultrasonore.

**6.** Procédé selon l'une des revendications précédentes, **caractérisé en ce que** les données spécifiques au capteur selon la revendication 5 et/ou les valeurs caractéristiques du signal d'excitation selon la revendication 4 sont combinées dans une fonction, qui est mise à disposition.

**7.** Procédé selon l'une des revendications précédentes, **caractérisé en ce que** la mise à disposition des valeurs caractéristiques à l'étape A et/ou la mise à disposition des données spécifiques au capteur s'effectue **en ce qu'**elles sont stockées en tant que bloc de données pour le débitmètre clamp-on respectif dans une mémoire de données d'un système de traitement de données, et sont mises à disposition par ce dernier.

**8.** Procédé selon l'une des revendications précédentes, **caractérisé en ce que**, dans une étape supplémentaire X, des informations concernant la structure du point de mesure sont mises à disposition, lesquelles informations sont prises en compte par le modèle mathématique lors de la détermination du facteur d'écart de mesure.

**9.** Produit de programme d'ordinateur avec lequel le procédé de l'une des revendications précédentes est mis en œuvre, le produit de programme d'ordinateur étant basé sur le modèle mathématique et déterminant, en utilisant les caractéristiques et les données des étapes A-C de la revendication 1, et éventuellement l'étape X de la revendication 8, un facteur d'écart de mesure approprié pour le diagnostic des défauts.

**10.** Débitmètre à ultrasons clamp-on comprenant au moins deux transducteurs ultrasonores pouvant être fixés à l'extérieur d'une conduite, et une unité d'exploitation, laquelle est conçue pour mettre en œuvre le procédé selon l'une des revendications 1 à 8 et qui effectue une correction de l'écart de mesure en temps réel sur la base d'un facteur d'écart de mesure déterminé.

**11.** Débitmètre à ultrasons clamp-on selon la revendication 10, **caractérisé en ce que** le débitmètre à ultrasons clamp-on comporte au moins un transducteur ultrasonore et une unité d'exploitation qui est conçue pour déterminer l'angle auquel le signal ultrasonore provenant de la paroi de conduite pénètre dans le produit.

Fig. 1

Fig. 2

Fig. 3

$$T_{burst} = n_{burst} \cdot T_{ex} = 3 \cdot 0.5\ \mu s = 1.5\ \mu s$$

$$f_{ex} = \frac{1}{T_{ex}} = \frac{1}{0.5\ \mu s} = 2.0\ MHz$$

Zeit t in μs

Fig. 4

$BW_{ex,-6\ dB}$

$f_{ex,dom}$

$f_{ex}$

Frequenz f in MHz

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Acoustic Transfer Function of the Clamp-On Flowmeter von Funck und Mitzkus. *IEEE Transactions on Ultrasonics, Ferroelectrics, and Frequency Control,* 1996, vol. 43 (4), 569-575
- **ALI, M. ; RAOUF MOHAMED, A.** A simulation of pulse-echo amplitude scan signal formation in absorbing media. *Ultrasonics,* 1992, vol. 30 (5), 311-316
- **WÖCKEL, S. ; STEINMANN, U. ; AUGE, J.** Signalanalyse für Ultraschall-Clamp-on-Systeme. *tm — Technisches Messen,* 2014, vol. 81 (2), 86-92

- **PLOß, P. ; RUPITSCH, S. J. ; LERCH, R.** Extraction of Spatial Ultrasonic Wave Packet Features by Exploiting a Modified Hough Transform. *IEEE Sensors Journal,* 2014, vol. 14 (7
- **PAVLAKOVIC, B. N. ; ROSE, J. L.** The Influence of Finite-Size Sources in Acousto-Ultrasonics / NASA. *Forschungsbericht,* 1994, 70
- **FUNCK, B. ; MITZKUS, A.** Acoustic transfer function of the clamp-on flowmeter. *IEEE Transactions on Ultrasonics Ferroelectrics and Frequency Control,* 1996, vol. 43 (4), 569-575